# EUROPEAN PATENT APPLICATION

(11) **EP 4 491 059 A1**
(43) Date of publication of application: **15.01.2025**
(21) Application number: 24172909.4
(22) Date of filing: 29.04.2024
(51) Int. Cl.: A45C 5/14, A63C 11/00, B60B 33/00, B63B 32/40

(54) **BOARD BAG**

(30) Priority: 10.07.2023 NL 2035318
(71) Applicant: Kubus Sports B.V., 3861 MA Nijkerk (NL)
(72) Inventor: CRETIER, Alex Paul, 3861 MA Nijkerk (NL)
(74) Representative: van Breda, Jacobus

(57) **Abstract**

Luggage (1), such as a bag or a suitcase, said luggage comprising a main body (2) which is equipped with wheels (3) that are dismountable and connected to the main body (2) of the luggage (1) with quick mount and dismount features. The quick mount and dismount features comprise a base or plural bases (4) that support the wheels (3), which base or bases (4) are slidably connectable to a mount or mounts (5) that are fixed on the main body (2) of the luggage (1) with snap connections.

## Description

The invention relates to a board bag arranged for transportation of KITE/WIND/SUP/FOIL equipment, comprising a main body which is equipped with fixed mounts for wheels that are connected near a lower edge of the main body of the board bag, wherein an upper part of the board bag is provided with a lift and pulling bar embodied as a handle which is parallel with said lower edge of the board bag.

Such a board bag luggage is used for transportation of KITE/WIND/SUP/FOIL equipment and has a design that is dedicated for that purpose. The wheels that are provided on the main body of the board bag makes transportation easy, even if the board bag with the equipment contained therein has great weight.

A problem is however that particularly with smaller airplanes, the known board bag with wheels does not always nicely fit in the overhead luggage compartment of the airplane. A further problem is that wheels on known board bags are usually mounted on the corners, which causes that the bottom of the board bag, if bent a little, drags on the ground and is subjected to wear and tear. Making the wheels larger makes little sense because one gains only the increased radius of the wheels, while at the same time the inner space of the board bag that also houses the wheels is reduced.

It is an object of the invention to address these problems.

According to the invention the board bag is equipped with features of one or more of the appended claims.

Essential to the board bag of the invention, comprising a main body which is equipped with fixed mounts for wheels that are connected near a lower edge of the main body of the board bag, and wherein an upper part of the board bag is provided with a lift and pulling bar embodied as a handle which is parallel with said lower edge of the board bag, is that each wheel comprises an individual base that supports the wheel, which base is slidably connectable to and removable from a corresponding mount on the body of the board bag, and that the wheels have a fixed rolling direction which is orthogonal to the lower edge of the main body and to the handle of the lift and pulling bar.

The invention makes removal of the wheels when this is required easy, and also supports a quick and easy remount of the wheels on the main body of the board bag. Mounting the wheels according to the invention completely at the underside of the luggage will provide greater ground clearance. To protect against the vulnerability of the wheels, especially during transport, it is an important feature of the invention to be able to remove the wheels very quickly and also to be able to quickly refit them.

The invention can be embodied in different ways, but preferably the base or plural bases that support the wheels that are slidably connectable to a mount or mounts that are fixed on the main body of the luggage suitably represent quick mount and dismount features.

It is further preferred that the base or bases are mountable on the mount or mounts that are fixed on the main body of the board bag with snap connections.

The accompanying drawing, which is incorporated into and forms a part of the specification, illustrates one or more embodiments of the present invention and, together with the description, serves to explain the principles of the invention. The drawing is only for the purpose of illustrating one or more embodiments of the invention and is not to be construed as limiting the invention.

In the drawing:
- figures 1 - 3 show the board bag of the invention in different views with the wheels being connected to the main body of the board bag; and
- figure 4 shows the board bag of the invention with the wheels being removed from the main body of the board bag.

Whenever in the figures the same reference numerals are applied, these numerals refer to the same parts.

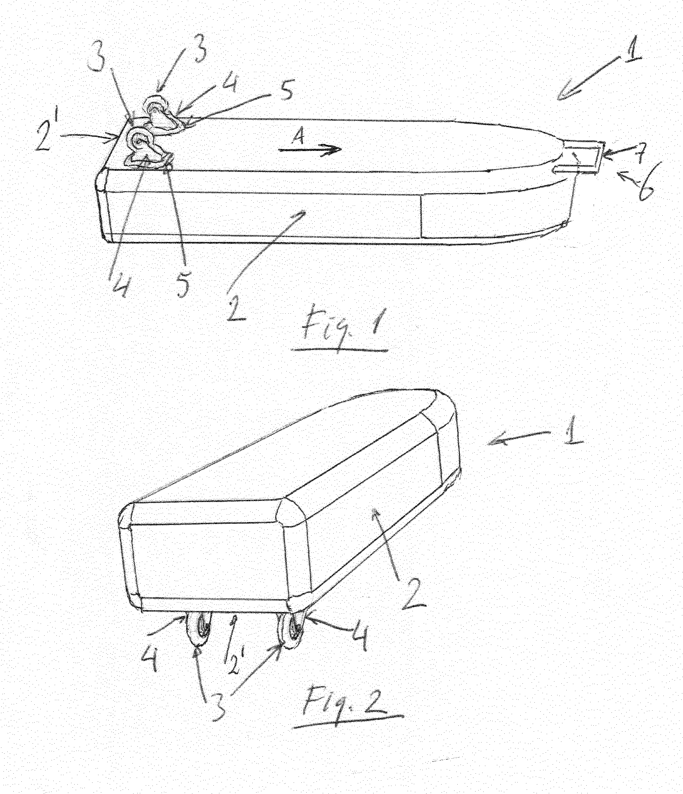

With reference first to figures 1 - 3, an example of a board bag 1 according to the invention is shown, wherein said board bag 1 comprises a main body 2 which is equipped with wheels 3.

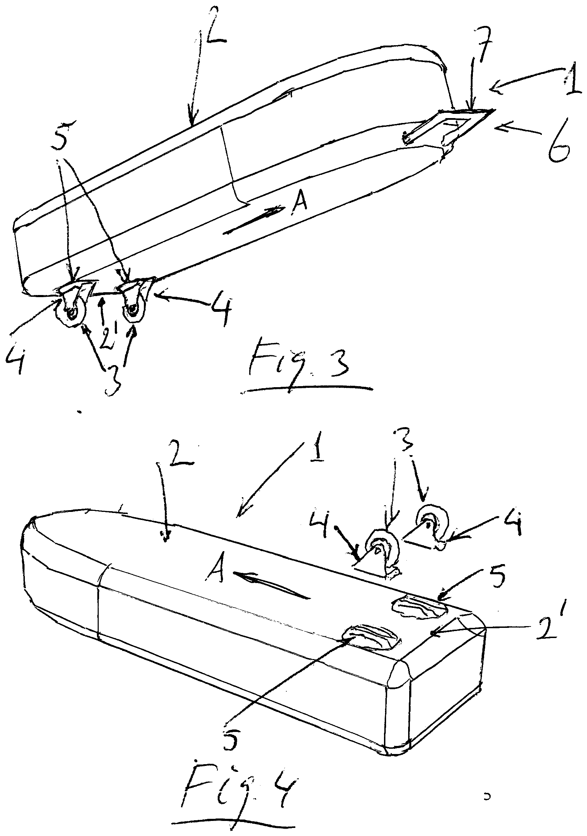

In figure 4 it is shown that said wheels 3 are dismountable. Mounting and dismounting of the wheels 3 to the main body 2 of the board bag 1 is arranged by applying quick mount and dismount features. Such quick mount and dismount features comprise a base or plural bases 4 that support the wheels 3, which base or bases 4 are slidably connectable to a mount or mounts 5 that are fixed on the main body 2 of the board bag 1.

In a preferred embodiment the base or bases 4 are mountable on the mount or mounts 5 that are fixed on the main body 2 of the board bag 1 with snap connections. Such snap connections are known to the skilled person, which makes it superfluous to show these snap connections in detail.

The mounts 5 are fixed near to a lower edge 2' of the main body 2 of the board bag 1, while an upper part of the board bag 1 is provided with a lift and pulling bar 6 embodied with a handle 7 which is parallel with said lower edge 2' of the board bag 1.

The wheels 3 have a fixed rolling direction A which is orthogonal to the lower edge 2' of the main body 2 and to the handle 7 of the lift and pulling bar 6.

Embodiments of the present invention can include every combination of features that are disclosed herein independently from each other. Although the invention has been discussed in the foregoing with reference to an exemplary embodiment of the invention, the invention is not restricted to this particular embodiment which can be varied in many ways without departing from the invention. The discussed exemplary embodiment shall therefore not be used to construe the append-ed claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

## Claims

1. Board bag (1) arranged for transportation of KITE/WIND/SUP/FOIL equipment, comprising a main body (2) which is equipped with fixed mounts (5) for wheels (3) that are connected near a lower edge (2') of the main body (2) of the board bag (1), wherein an upper part of the board bag (1) is provided with a lift and pulling bar (6) embodied as a handle which is parallel with said lower edge (2') of the board bag, **characterized in that** each wheel (3) comprises an individual base (4) that supports the wheel (3), which base (4) is slidably connectable to and removable from a corresponding mount (5) on the body (2) of the board bag (1), and that the wheels (3) have a fixed rolling direction (A) which is orthogonal to the lower edge (2') of the main body (2) and to the handle (7) of the lift and pulling bar (6).

2. Board bag (1) according to claim 1, **characterized in that** the base or bases (4) are mountable on the mount or mounts (5) that are fixed on the main body (2) of the board bag (1) with snap connections.
